# FASCICULE DE BREVET EUROPEEN

(11) **EP 2 029 333 B1**
(45) Date de publication et mention de la délivrance du brevet: **05.12.2012**
(21) Numéro de dépôt: 07803748.8
(22) Date de dépôt: 18.05.2007
(51) Int. Cl.: B27K 5/04, B27K 3/15

(54) **PROCEDE D'ETANCHEIFICATION D'UN ELEMENT DE MENUISERIE EN BOIS**
VERFAHREN ZUR VERSIEGELUNG EINES TISCHLEREIELEMENTS
METHOD FOR SEALING A WOOD JOINERY ELEMENT

(30) Priorité: 21.06.2006 FR 0605532
(43) Date de publication de la demande: 04.03.2009
(73) Titulaire: Faivre, Michel, 25460 Roulans (FR)
(72) Inventeur: Faivre, Michel, 25460 Roulans (FR)
(74) Mandataire: Gendron, Vincent Christian
(86) Numéro de dépôt international: PCT/FR2007/000858
(87) Numéro de publication internationale: WO 2007/147955

(56) Documents cités:
- EP-A- 1 447 189
- WO-A-86/00041
- WO-A-97/02134
- WO-A-2004/035277
- WO-A2-02/064337
- DE-A1- 3 432 135
- DE-A1-102005 010 041
- FR-A- 1 013 946
- US-B2- 6 602 605
- DATABASE WPI Week 198344 Derwent Publications Ltd., London, GB; AN 1983-806650 XP002418261 & SU 986 789 A (AS BELO MET POLYMER) 7 janvier 1983 (1983-01-07)

## Description

La présente invention concerne un procédé d'étanchéification d'un élément de menuiserie en bois, qu'il soit naturellement plein ou reconstitué, tel que le « lamellé-collé ».

Le domaine technique auquel se rattache l'invention est donc celui des huisseries, telles que portes et fenêtres, mais également le mobilier urbain ou de jardin, tel que bancs, portiques, fauteuils, tables, jardinières, etc.

Dans ce domaine, et plus particulièrement en ce qui concerne les fenêtres et les portes en bois, un problème réside dans le fait que le bois nécessite un entretien régulier avec des lasures ou peintures, obligatoirement microporeuses, pour permettre au bois de respirer, quelle que soit son essence.

A défaut, sa structure interne s'altérerait et provoquerait une pourriture des cellules.

D'autre part, les variations dimensionnelles naturelles du bois gênent à son entretien et à l'isolation des fenêtres du fait de la déformation structurelle du bois.

Pour remédier à ce défaut, une des techniques connues est de chauffer le bois à très haute température afin d'extraire la résine et l'eau présentes dans la matière, dans et entre les cellules.

Cette technique d'extraction de résine et d'eau modifie la structure interne du bois en améliorant son pouvoir isolant par une multiplication de la porosité, mais rend le bois fragile et cassant.

Egalement, le pouvoir d'absorption d'humidité du bois restant entier, cela peut, en période hivernale, gravement endommager sa cohésion interne.

A noter également l'altération naturelle du bois due à l'oxydation, appelée grisaillement, qui nuit à l'esthétisme du produit fini.

Pour ce qui concerne les structures chauffées en « lamellé-collé », le film de colle peut s'altérer dans le temps.

Enfin, dans tous les cas, comme le bois naturel, le bois chauffé a besoin d'un entretien permanent avec des lasures ou des peintures et, selon l'exposition et les essences utilisés, l'humidité continuera à s'installer dans le bois chauffé et à donner naissance à des micro-lichens qui entraîneront le pourrissement.

Par ailleurs, il faut savoir qu'en règle générale, le bois utilisé en fermeture dans le bâtiment est de 12% d'humidité, mais que le bois est hygroscopique, c'est-à-dire qu'il perd et reprend de l'humidité en fonction de l'air ambiant.

En protection, comme déjà évoqué, on utilise des lasures ou peintures microporeuses pour favoriser les échanges d'humidité avec l'air ambiant, mais ces revêtements n'offrent pas une étanchéification du bois. Il est donc nécessaire de renouveler régulièrement l'opération car l'humidité continue à entrer et sortir des cellules.

Il a également été tenté d'utiliser un bois anhydre en le chauffant à 230°. Mais cela n'a pas donné satisfaction car on relève des diminutions importantes des propriétés de flexion, une très mauvaise résistance aux ultra-violets, et le problème d'hygroscopie évoqué ci-dessus demeure de toute façon.

Autrement dit, que le bois soit séché ou non, le problème est identique et demeure bien dans le fait qu'il aura toujours tendance à reprendre l'humidité dont il a été libéré, naturellement ou artificiellement par chauffage.

Lors du séchage, l'eau libre et l'eau d'imprégnation ou de saturation présente dans le bois, dans et entre ses cellules, est évacuée sous forme de vapeur.

En résumé, les difficultés rencontrées avec le bois, séché ou non, sont les suivantes :
- un bois vert imbibé d'eau commence à sécher sans que ses dimensions ne changent, mais lorsqu'il atteint un taux d'humidité correspondant au départ de toute l'eau libre, ses dimensions diminuent au fur et à mesure du départ de l'eau imprégnée dans les parois cellulaires ;
- à l'inverse, un bois déjà sec reprend de l'humidité et subit une augmentation de volume ;
- le bois se met toujours en état d'équilibre d'humidité avec le milieu ambiant ;
- le retrait varie selon la nature des bois, un bois dur et dense a toujours un retrait relativement élevé, au contraire des bois tendres qui ont un faible retrait ;
- les valeurs du retrait ou du gonflement dans les divers sens du bois sont variables et c'est de cette inégalité des retraits que proviennent les déformations (gauchissement) et les fentes ou gerces.

Pour remédier à ces difficultés, il a été proposé de réaliser des éléments de menuiserie non plus en bois, mais à partir de profilés en PVC. Mais le profilé PVC en lui-même ne suffit pas à conférer la rigidité mécanique nécessaire, et on lui adjoint, en fabrication, une âme, généralement métallique. Le profilé PVC, d'épaisseur se situant entre 1,5 mm et 2,5 mm, n'est que l'habillage esthétique de cette âme.

Un nouvel inconvénient réside dans le fait que le PVC subit des cassures dues aux variations de température. De plus, il se dégage de ce matériau des dioxines, bien connues pour être cancérigènes. Egalement, son aspect se dégrade dans le temps.

Il est également connu de protéger la menuiserie bois par un placage en PVC ou en aluminium placé à l'extérieur du bâtiment où est placée la fenêtre ou porte, ce placage s'effectuant sur le bois naturel ou sur un bois chauffé. Mais l'expérience a montré qu'une telle protection provoque une condensation, le transfert thermique-hygroscopique étant bloqué, se traduisant à terme par un effet de pourrissement du bois constitutif de la fenêtre ou porte.

De plus, on n'obtient pas l'esthétisme recherché à l'extérieur.

La présente invention a donc pour but de remédier à l'ensemble des inconvénients du bois naturel, du bois naturel et séché, du PVC, et du bois protégé extérieurement par du PVC ou de l'aluminium, ceci dans les éléments de menuiserie en général, et concerne à cet effet un procédé d'étanchéification d'un élément de menuiserie en bois, notamment fenêtre ou porte, se caractérisant par les étapes suivantes :
- séchage du bois formant l'élément, jusqu'à atteindre un taux d'humidité inférieur à 12%,
- imprégnation préalable à coeur du bois avec une résine polymère étanche, naturelle ou synthétique,
- application externe de la même résine polymère, sur toutes les faces de l'élément bois, selon une épaisseur de 1 mm environ, de manière à constituer un enrobage de celui-ci.

Selon l'invention, préalablement à l'application externe de la résine polymère étanche, est effectuée l'imprégnation à coeur du bois par une résine polymère étanche, naturelle ou synthétique, d'atomisation, telle à permettre sa migration dans les cellules du bois préalablement asséchées.

De manière plus précise, l'âme est en bois brut (donc non résiné tel que l'aggloméré), imprégné à coeur avec une résine polymère, puis habillé avec cette même résine selon une épaisseur de 1 mm environ.

Préférentiellement, cet enrobage étanche de la structure bois s'effectue sur un bois séché à un taux d'humidité inférieur à 7% (stabilité dimensionnelle).

Est ainsi créé un espace inerte et stable. La résine d'imprégnation et d'enrobage étanche évite l'hygroscopie, stabilise la tenue aux ultra-violets et renforce les propriétés de flexion des bois utilisés, dont l'eau d'imprégnation est inférieure à 12% mais préférentiellement entre 7 et 12%, voire inférieure à 7% comme évoqué ci-dessus.

Pour obtenir ce résultat, on chauffe le bois dans un four entre 160 et 200°, ±20%. Il est donc séché à coeur et n'a plus de variations dimensionnelles. Il n'a plus besoin de « respirer », et il peut donc recevoir le polymère étanche selon l'invention.

De plus, le bois chauffé dans cette plage de température conserve suffisamment de résistance mécanique.

Par ailleurs, l'avantage de cet enrobage résineux permet, en employant un polymère transparent, de conserver l'esthétisme de l'âme en bois. Pour obtenir un résultat similaire en PVC, on aurait été dans l'obligation de le teinter dans un coloris « bois ».

Le film de résine polymère renforce la structure du bois chauffé par sa cohésion en surface et par le remplissage de sa microporosité.

Dans le cas du bois « lamellé-collé », il remplit également le rôle de protecteur de film de colle. Il évite tout entretien de l'âme « bois » au même titre que le PVC sur le métal qui, lui, n'est pas exempt de variations dimensionnelles.

En résumé, les avantages procurés par l'invention sont les suivants :
- en surface : protection totale des ultra-violets se traduisant par une longévité de l'élément de menuiserie ;
- possibilité d'utilisation de bois de pays se traduisant par une économie dans le prix de revient de l'élément ;
- transparence du polymère, laissant le veinage naturel apparent ;
- suppression de l'aspect cassant dû à une trop grande dessiccation, grâce aux migrations du polymère à l'intérieur des cellules du bois, remplaçant l'eau évacuée par le séchage. Le bois absorbe le polymère fluide et on reconstitue ainsi le bois en lui rendant sa flexibilité, mais par un autre composant que l'eau, à savoir le polymère imbibant les cellules bois à l'intérieur de celles-ci et entre celles-ci. Il est effectué, en quelque sorte, un colmatage des cellules par imprégnation ;
- obtention d'un film étanche de haute résistance et, par conséquent, suppression de l'entretien permanent inhérent au bois.

Selon un premier exemple d'application, la résine polymère est un polyuréthane aliphatique.

Selon un autre exemple de réalisation, la résine polymère est un isocyanate.

Cette résine peut également être constituée par du polyol, du polyester, de l'acétate. Elle peut également être constituée par une résine de silicone.

## Revendications

1. Procédé d'étanchéification d'un élément de menuiserie en bois, notamment fenêtre ou porte, **se caractérisant par** les étapes suivantes :
- séchage du bois formant l'élément, jusqu'à atteindre un taux d'humidité inférieur à 12%,
- imprégnation préalable à coeur du bois avec une résine polymère étanche, naturelle ou synthétique,
- application externe de la même résine polymère, sur toutes les faces de l'élément bois, selon une épaisseur de 1 mm environ, de manière à constituer un enrobage de celui-ci.

2. Procédé d'étanchéification selon la revendication 1, **caractérisé en ce que** le taux d'humidité du bois, suite à son séchage, se situe entre 7 et 12%.

3. Procédé d'étanchéification selon la revendication 1, **caractérisé en ce que** le taux d'humidité du bois, suite à son séchage, est inférieur à 7%.

4. Procédé d'étanchéification selon l'une des revendications 1 à 3, **caractérisé en ce que** le séchage du bois est effectué dans un four entre 160° et 200°, ±20%.

5. Procédé d'étanchéification selon l'une des revendications 1 à 4, **caractérisé en ce que** la résine polymère est un polyuréthane aliphatique.

6. Procédé d'étanchéification selon l'une des revendications 1 à 4, **caractérisé en ce que** la résine polymère est un isocyanate.

7. Procédé d'étanchéification selon l'une des revendications 1 à 4, **caractérisé en ce que** la résine polymère est un polyol.

8. Procédé d'étanchéification selon l'une des revendications 1 à 7, **caractérisé en ce que** l'enrobage résineux est un polymère transparent, de manière à conserver l'esthétisme de l'âme du bois.

## Claims

1. Method for sealing a wood joinery element, in particular a window or door, **characterised by** the following steps:
- drying of the wood forming the element, until a moisture content of less than 12% is attained,
- prior impregnation of the core of the wood with a natural or synthetic, impervious polymer resin,
- external application of the same polymer resin, on all of the faces of the wood element, according to a thickness of approximately 1 mm, in such a way as to form a coating of the latter.

2. Method for sealing according to claim 1, **characterised in that** the moisture content of the wood, after the drying thereof, is between 7 and 12%.

3. Method for sealing according to claim 1, **characterised in that** the moisture content of the wood, after the drying thereof, is less than 7%.

4. Method for sealing according to one of claims 1 to 3, **characterised in that** the drying of the wood is carried out in an oven between 160° and 200°, ±20%.

5. Method for sealing according to one of claims 1 to 4, **characterised in that** the polymer resin is an aliphatic polyurethane.

6. Method for sealing according to one of claims 1 to 4, **characterised in that** the polymer resin is an isocyanate.

7. Method for sealing according to one of claims 1 to 4, **characterised in that** the polymer resin is a polyol.

8. Method for sealing according to one of claims 1 to 7, **characterised in that** the resinous coating is a transparent polymer, in such a way as to retain the aesthetics of the core of the wood.

## Patentansprüche

1. Verfahren zum Abdichten eines Schreinerelements aus Holz, im Speziellen eines Fensters oder einer Türe, das durch die folgenden Schritte gekennzeichnet ist:
- Trocknen des Holzes, aus dem das Element gebildet wird, bis zum Erreichen eines Feuchtigkeitsgehalts von unter 12%,
- Vorimprägnieren des Holzes bis zum Kern mit einem dichten, natürlichen oder synthetischen Polymerharz,
- externe Anwendung desselben Polymerharzes auf alle Flächen des Holzelements, in einer Schichtdicke von etwa 1 mm, sodass darauf ein Überzug gebildet wird.

2. Abdichtverfahren nach Anspruch 1, **dadurch gekennzeichnet, dass** der Feuchtigkeitsgehalt des Holzes nach seiner Trocknung zwischen 7 und 12% liegt.

3. Abdichtverfahren nach Anspruch 1, **dadurch gekennzeichnet, dass** der Feuchtigkeitsgehalt des Holzes nach seiner Trocknung unter 7% liegt.

4. Abdichtverfahren nach einem der Ansprüche 1 bis 3, **dadurch gekennzeichnet, dass** das Trocknen des Holzes in einem Ofen bei einer Temperatur zwischen 160° und 200°, ± 20% erfolgt.

5. Abdichtverfahren nach einem der Ansprüche 1 bis 4, **dadurch gekennzeichnet, dass** das Polymerharz ein alipatisches Polyurethan ist.

6. Abdichtverfahren nach einem der Ansprüche 1 bis 4, **dadurch gekennzeichnet, dass** das Polymerharz ein Isozyanat ist.

7. Abdichtverfahren nach einem der Ansprüche 1 bis 4, **dadurch gekennzeichnet, dass** das Polymerharz ein Polyol ist.

8. Abdichtverfahren nach einem der Ansprüche 1 bis 7, **dadurch gekennzeichnet, dass** der Harzüberzug ein farbloses Polymer ist, sodass die Ästhetik des Holzkerns erhalten bleibt.
